# EUROPEAN PATENT SPECIFICATION

(11) **EP 2 396 589 B1**
(45) Date of publication and mention of the grant of the patent: **05.12.2012**
(21) Application number: 10709299.1
(22) Date of filing: 11.02.2010
(51) Int. Cl.: F17C 5/06

(54) **A PLANT FOR STORING AND SUPPLYING COMPRESSED GAS**
ANLAGE ZUR SPEICHERUNG UND AUSGABE VON KOMPRIMIERTEM GAS
USINE DE STOCKAGE ET DE DISTRIBUTION DE GAZ COMPRIMÉ

(30) Priority: 11.02.2009 NO 20090660
(43) Date of publication of application: 21.12.2011
(73) Proprietor: Nel Hydrogen AS, 3671 Notodden (NO)
(72) Inventor: FJALESTAD, Kjetil, N-3731 Skien (NO); GRØNSTAD, Leif Kåre, N-3766 Sannidal (NO); KAASA, Øyvind, N-3830 Ulefoss (NO); NAKKEN, Torgeir, N-3931 Porsgrunn (NO); KITTILSEN, Pål, N-7020 Trondheim (NO)
(74) Representative: Roman Ekstedt, Måns
(86) International application number: PCT/NO2010/000051
(87) International publication number: WO 2010/093255

(56) References cited:
- WO-A1-03/019016
- WO-A1-2009/035311
- DE-C1- 19 843 669
- US-A- 4 805 674
- US-A- 5 454 408
- US-A- 5 676 180
- US-A1- 2010 059 138
- US-B1- 6 202 707

## Description

The present invention relates to a plant for storing and supplying compressed gas such as compressed hydrogen gas from various filling plants and the like. The present invention also relates to a method in relation to such a plant.

One common alternative for a fuel filling station is to store and supply compressed hydrogen gas. Normally, this is effected by means of storing compressed hydrogen in one or more stationary storage tanks, and the vehicles' fuel tanks are then filled by decanting using pressure difference forces, also called cascade filling. This solution is used by a great number of hydrogen fuel stations.

The use of cascade filling requires some overpressure in the storage tanks and, when the filling is completed, the pressure in the storage tank is equal or higher than the pressure in the vehicle tank. Thus, there will always be significant amounts of hydrogen left in the storage tanks that cannot be utilized. The typically percentages for storage efficiencies are 30 - 60%. i.e. the relative amount of stored gas to be exploited for filing in cascade-based filling stations. This has several drawbacks:
1. This unexploited hydrogen gas causes an extra safety risk, because there is at all times a need to store significantly more hydrogen than can be transferred to the vehicles.
2. There is an extra cost related to this excess of storage capacity needed.
3. Extra space is required.
4. The dimensioning of the filling station is a difficult and non-precise task, as the storage pressure, and thus the availability to refill vehicles, varies as function of the filling frequency and quantities.

Based on these facts, it is obviously a need of a plant for storing and supplying compressed gas having improved storage efficiency and, thus, provides for smaller gas storage tanks, for instance.

In WO 03019016 A1, a storage vessel is filled with compressed gas by filling a first tank with gas from a low pressure gas source. Hydraulic fluid is drawn from a reservoir and pumped into the first tank in contact with the gas. This causes the gas in the first tank to flow into the storage vessel as it fills with hydraulic fluid. At the same time, gas is supplied from the gas source to a second tank. Hydraulic fluid previously introduced into the second tank flows out to the reservoir as the second tank fills with gas. When the first tank is full of hydraulic fluid, a valve switches the cycle so that the hydraulic pump begins pumping hydraulic fluid back into the second tank while the first tank drains. The cycle is repeated until the storage vessel is filled with gas to a desired pressure.

According to a first aspect the of present invention, a plant for compressing gas is disclosed, including at least one pressurization tanks for gas. The plant further is comprising a buffer tank for a pressure support fluid to be filled into or evacuated from a lower portion of the respective pressurization tank, and the lower portion of the pressurization tank is communicating with the buffer tank via a fluid flow line to fill and evacuate fluid during pressurization and refilling, respectively.

According to a second aspect the of present invention, a plant for storing and supplying compressed gas is disclosed. The plant is comprising a storage tank for gas, at least one pressurization tank for gas and a buffer tank for a pressure support fluid to be filled into or evacuated from lower portions of the storage and pressurization tanks, and the lower portions of the storage and pressurization tanks are communicating with the buffer tank via fluid flow lines to fill fluid during supplying from and pressurizing gas in the plant, and a flow line for evacuating fluid during refilling of the pressurization tank.

According to a third aspect of the present invention, a plant for storing compressed gas is disclosed, including a storage tank for gas. The plant further is comprising a buffer tank for a pressure support fluid to be filled into or evacuated from a lower portion of the storage tank, and the lower portion of the storage tank is communicating with the buffer tank via a fluid flow line to fill and evacuate fluid during supplying gas from the plant and refilling gas to the plant, respectively.

According to another aspect of the invention, there is disclosed a method in a plant for compressing gas, the plant including at least one pressurization tanks for gas, and a buffer tank for a pressure support fluid, wherein a lower portion of the pressurization tank is communicating with the buffer tank via a fluid flow line, the method comprising: filling or evacuating fluid into or from the lower portion of the respective pressurization tank via the fluid flow line during pressurization and refilling, respectively.

According to yet another aspect of the invention, there is disclosed a method in a plant for storing and supplying compressed gas, the plant including a storage tank for gas, at least one pressurization tank for gas, and a buffer tank for a pressure support fluid, wherein lower portions of the storage and pressurization tanks are communicating with the buffer tank via fluid flow lines, and wherein a lower portion of the respective pressurization tank is communicating with the buffer tank via a flow line, the method comprising: filling fluid into lower portions of the storage and pressurization tanks via the fluid flow lines during supplying from and pressurizing gas in the plant; and evacuating fluid from the lower portion of the respective pressurization tank via the flow line during refilling of the pressurization tank.

The lower portions of the storage and pressurization tanks can favourably communicate with one another via a fluid flow line to exchange fluid between the storage and pressurization tank, whereas the gas being pressurized in the pressurization tank can be moved into the storage tank via a gas flow line communicating the pressurization and storage tanks with one another, the gas flow line being situated between upper portions of the pressurization and storage tanks.

Thus, and as mentioned above, is specified a concept using fluid as a pressure support during supplying and pressurization gas as well as during moving gas from the pressurization tank into the storage tank. With this solution it is possible to get almost 100 % storage efficiency. In addition, as to be shown, it is possible to combine the pressure support feature with an alternative compression technology. The advantages are need for less storage size on the filling plants and more (energy) efficient gas compression.

In addition, this compression technology, using a fluid pumps rather than traditional mechanical gas compressors, has an improved robustness, making the compression technology in far better accordance with the requirements for filling station applications.

Yet another advantage of using the specified invention, is the ease of measuring the amount of gas supplied to the end-user. The variation in amount of pressure support fluid in the storage tank is directly linked to the amout of gas supplied to the end user, and expensive mass flow meters can be replaced by simple, robust and inexpensive methods of utilizing a mass balances on the storage tank, possible in combination with monitoring the flow through the fluid pump.

Other favourable embodiments of the present invention are to be understood from the dependent claims and the discussion below. Features of the dependent claims may also apply to the above-mentioned methods.

Now, the present invention is to be described in detail with reference to the drawings, in which:
Figure 1 illustrates a preferred embodiment including a storage tank, one or more pressurization tanks, and a buffer tank.

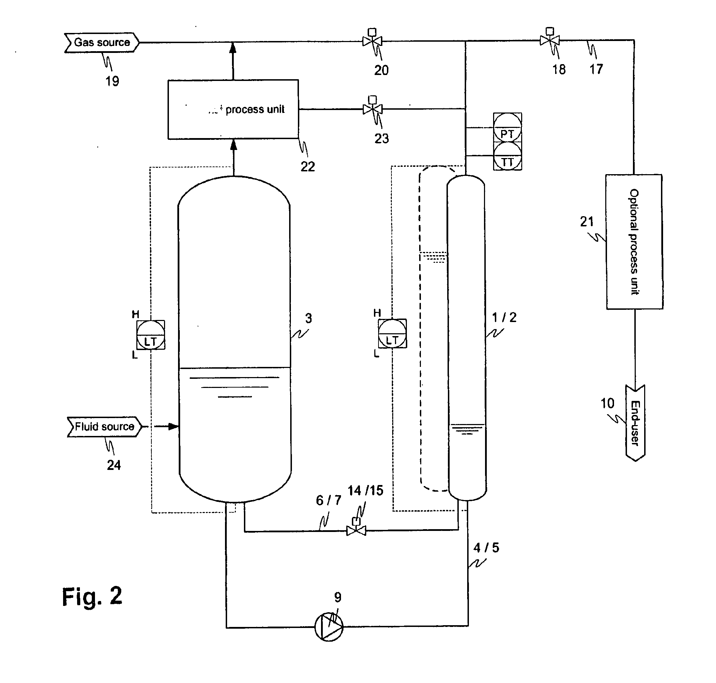

Figure 2 illustrates an example of a plant including either a storage tank or one or more pressurization tanks, and a buffer tank.

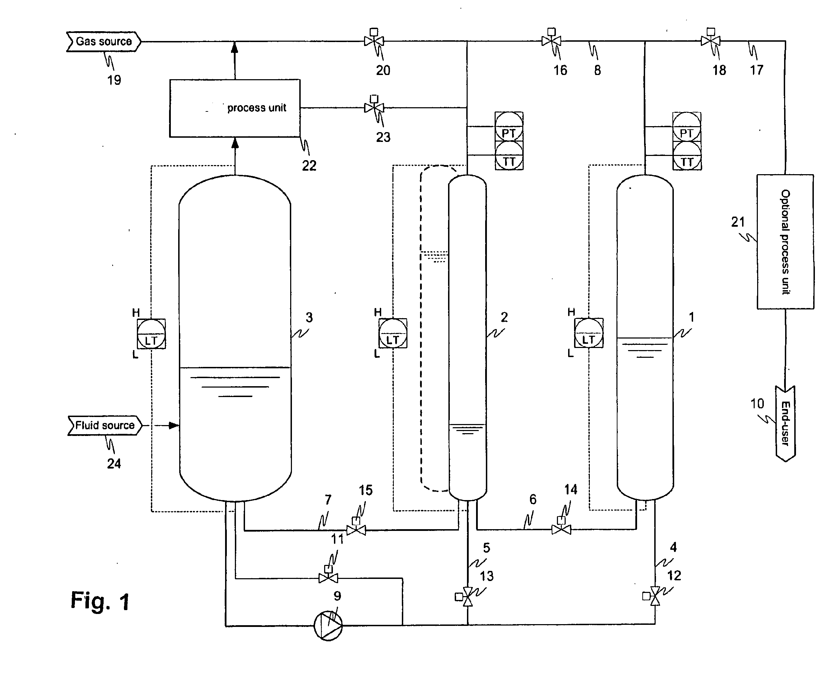

The pressure support concept according to the present invention is envisaged grouped into three process units, as illustrated in Figure 1. Although presented in the form of a tank for storing and supplying compressed gas such as hydrogen in fuel filling stations, it is to be understood that this shall only be interpreted in an illustrative and, thus, not restrictive manner. The invention can be used in connection with other gases than hydrogen such as natural gas or propane, for instance, and even non-gaseous fluids having a lower density than the fluid is also applicable as long as the fluid and the product fluid are non-miscible. The potential loss of product through diffusion or evaporation can be reduced by physical means on the interphase between the two fluids. The description is focusing on use of water as the fluid and hydrogen as the product fluid but this is not involving a restriction neither shall the reference to fuel filling stations, as the latter can be replaced by any facility in need of such pressure support concept.
1. A storage tank 1 for hydrogen. This unit contains of a vertical raised container with water in the lower part and hydrogen in the upper part. Hydrogen from this container is to be filled into vehicle tanks. The pressure is set to the maximal end-pressure of vehicle filling, e.g. typical 875 bar for a 700-bar system. The pressure is kept constant by adjusting the water level within the container. A filling pump 9 is used for pumping water into the container from a water buffer tank 3, see below. Further, hydrogen is filled into vehicles by means of a supply line 17 including at least one filling supply valve 18.
2. At least one pressurization tank 2 for hydrogen, possible supplementary tanks are indicated by dotted line. This unit is similar to the vertical raised container mentioned above to be the storage tank 1. The volume of each of the pressurization tanks is normally smaller than the storage tank and each of these tanks along with the storage tank are supplied from an external hydrogen source 19. A source valve 20 is included in a hydrogen line between the external source and the respective pressurization tanks. The operation pressure is between the pressure of the storage tank and hydrogen source, respectively. A pressurization tank pump 9 is used to fill water from the buffer tank 3. The pump can be the same as the pump described in paragraph 1, or be a separate pump to serve the pressurization tank independently of the storage tank. Several pressurization tanks can be combined to allow for operation in different states:
   a. Pressurization state in which the mass of hydrogen in the pressurization tank 2 is constant, and the water level is raised to increase the pressure.
   b. Exchange state in which hydrogen from the pressurization tank is exchanged with water from the storage tank 1.
   c. Refilling state in which the hydrogen pressure is constant and the water is evacuated through a flow line 7 to the buffer tank 3, and the water level is lowered to import hydrogen from the source 19.
3. A water buffer tank 3. This unit is a buffer for the water used in the storage and pressurization tanks 2. The pressure is relatively low. Because dissolved hydrogen may evaporate from the depressurized water, there is need for hydrogen handling by an unit 22 with the possible recycle of vaporized hydrogen through a supply valve 23 or by venting the vaporized gas.

Exemplary pressure values for the storage tank 1, pressurization tank 2, buffer tank 3, and vehicle tank 10 are typically 875 bar, 30 - 875 bar, 1 - 30 bar, and 50 - 875 bar, respectively.

The process units mentioned above are operated almost independently of each other with base layer, PLC controllers and autonomous mechanical equipment, e.g. check valves, not illustrated, to maintain a desired pressure or sequence. The normal operation of the process can be groped as follows, see also Figure 1. Note there are two slightly different modes of operating the compressor cycle, depending on how hydrogen and water is exchanged between the pressurization and storage tanks:
1. Vehicle filling.
   a. A vehicle tank 10 is attached to the storage tank 1 and the filling valve 18 is opened, thereby allowing hydrogen to flow from the storage tank having higher pressure to the vehicle tank having lower pressure. Then, the pressure in the storage tank starts to decrease but a pressure controller, not illustrated, is initiating a flow of water into the storage tank to keep the pressure at its set point. The desired amount of water is pumped from the buffer tank 3 into the storage tank using the filling pump 9 and the optional filling pump control valve 11.
2. Compression cycle.
   a. Compressing state. At the start of this phase, the pressurization tank 2 is filled completely with hydrogen having the pressure equal to the source 19, e.g. about 30 bar. All gas source valves and sink valves 16, 20, 23 are closed. The control system starts pumping water into the pressurization tank via the water pump 9. If the process is made with only one pressurization tank, water is taken from the buffer tank 3. If two or more pressurization tanks 2 are present, it is possible to take water from one of these other pressurization tanks being in the refilling state, see below. Using another pressurization tank can reduce the boil-off of hydrogen in the buffer tank. During the compressing state, the pressure increases correspondingly to the decrease in gas volume. From this point there are different options on further progress according to an overpressure exchange type of algorithm, or a gravity or pump exhange algorithm:
      i. Overpressure exchange. The pressure elevation progress until the pressurization tank pressure reaches the storage tank pressure. At this point the control system or a check valve opens for gas flow 16 and hydrogen is transferred from the pressurization to the storage tank. Water is still pumped into the tank until the pressurization tank level or the pressure in the storage tank reaches an upper limit, i.e. higher than the setpoint of the storage tank. The cycle then continues with the refilling state.
      ii. Gravity or pump exchange. The pressure elevation progress until: either 1) the pressurization tank pressure reaches the storage tank pressure, if this is lower than the setpoint, at this point the control system or a check valve opens for gas flow 16 and hydrogen is transferred from the pressurization to storage tank; or 2) the pressurization tank pressure reaches the setpoint of the storage pressure. In the latter case the supply from the water pump is stopped, by closing a supply valve 13, and for a gravity operated process, in which the storage tank is elevated with respect to the pressurization tank, both the hydrogen and water valves 16, 14 between the pressurization tank and storage tank are opened to let water run from the storage tank into the pressurization tank in the lower sections of the tanks, flow line 6, and hydrogen flowing from the pressurization tank to the storage tank in the gas flow line 8. In a pump exchange process, a pump, possibly the pump 9 in a modified process configuration, must ensure the water flow from the storage tank 1 to the pressurization tank 2. Both case 1) and 2) progress until the water level in the pressurization tank is at its highest setpoint, e.g. 99%, with the state change to the refilling state. This exchange of hydrogen and water will ensure a minimal loss of the dissolved hydrogen in the storage tank water with a minimum use of power.
   b. Refilling state. At the onset of this state, the pressurization tank 2 is almost filled with water at the pressure of the storage tank 1, e.g. about 875 bar. The next step is to exchange water with "fresh" hydrogen for another compression cycle. The flow line from the pressurization tank to the buffer tank 3 is opened, alternatively to the path to another pressurization tank, discharging water to depressurize the tank. The pressure is decreasing as the water level lowers. As the pressure decreases, hydrogen evaporates from the water, but mainly inside the pressurization tank. Thus, this hydrogen can be recompressed again in the next cycle and is not "lost" to the buffer tank 3. At some point, such as at a certain water level, the pressure in the pressurization tank equals the pressure of the hydrogen source 19. The control system, or a check valve, then opens a supply valve 20 from the source into the pressurization tank. When the water level is further decreased, hydrogen from the source is filling the pressurization tank. This progress until the water level is at the minimum and, thus, the compression cycle progress to the next state in case of overpressure mode, or the compression is repeated by jumping to step a, otherwise.
   c. Exchange state. This state is for the overpressure algorithm, 2.a.i only. At the finalization of the compressing state, the pressure in the storage tank 1 was allowed to increase. Now, it is time to lower the pressure by transferring water from the storage tank to the pressurization tank 2. This occurs only if the pressure in the storage tank is above the setpoint. By moving water from the storage tank to the pressurization tank, the evaporated hydrogen is recompressed and not lost to the buffer tank. The transfer is enabled by using a flow line 6 by opening the supply valve from the storage to the pressurization tank 14 until the pressure in the storage tank drops to a lower desired pressure. After this step, the system is ready to repeat the compression cycle by returning to step a.

Controlling the water pressure support filling process is carried out by using a combination of process control elements, such as PI controllers, not illustrated, PLC algorithms and autonomous mechanical components such as check valves. The PI-controllers are always active and work in parallel with the different steps initiated by the PLC.

Now, a more detailed explanation is to be given of components included in the plants according to the present invention. The lower portions of the storage and pressurization tanks 1, 2 are communicating with one another via a fluid flow line 6 to exchange fluid between the storage and pressurization tank, whereas the gas being pressurized in the pressurization tank is moved into the storage tank via a gas flow line 8 communicating the pressurization and storage tanks with one another, the gas flow line being situated between upper portions of the pressurization and storage tanks. The exchange of gas and fluid can occur either simultaneously by using a pump or gravitational forces to move the fluid from the storage to the pressurization tank, or by sequenctional operation for which a provided overpressure in the storage tank in the first part of the sequence enables the transfer of fluid from the storage tank to the pressurization tank in the second part of the sequence.

The fluid flow line 4 for the storage tank 1 is formed with at least one filling pump 9 used to fill fluid from the buffer tank 3 into the storage tank 1 when supplying gas from the plant to an end-user 10 and a storage tank shut-off valve 12 used when pressurizing the gas contained in the pressurization tank 2 using fluid from the buffer tank.The fluid flow line 5 for the pressurization tank 2 is having at least one pressurization pump 9 used to fill fluid from the buffer tank 3 into the pressurization tank when pressurizing the gas contained in the pressurization tank, and a pressurization tank shut-off valve 13 used when gas contained in the storage tank 1 is to be filled to an and-user using fluid from the buffer tank. The fluid filling rate into the storage and pressurization tanks can be controlled by a filling pump control valve 11 or by a direct control of the filling pump rate, not excluding other alternative fluid rate controlling mechanisms. It is understood that both of the flow lines 4, 5 can be fed using the same pump 9. A fluid outlet line 7 from the pressurization tank 2 and a gas outlet line 17 from the storage tank 1 is equipped with a fixed or variable restriction supply valve 15, 18, respectively.

Gas is filled into the pressurization tank 2 from an external gas source 19 via an external gas source supply valve 20, or directly into the storage tank from an external high pressure gas source via an external gas source supply valve, not illusterated. Fluid is filled into the buffer tank 3 from an external fluid source 24 to compensate for any fluid loss from the plant.

The fluid level can be monitored by high and low level detectors to prevent fluid from entering gas flow lines. Further, the fluid level, gas temperature and tank pressure can be measured and applied with the tank volume for calculating or, alternatively, the pump strokes can be measured and applied for calculating the mass of gas either filled to the end-user 10 or compressed during each cycle. The fluid and/or gas can be separated by suitable means to reduce any exchange of molecules between the fluids. Non of these feature are shown in the drawings.

The gas supplied to the end-user 10 is processed, e.g in a unit 21, thereby enabling the gas to be dried, cleaned, cooled and the like. The pressure in the buffer tank 3 is measured and controlled to optimize the energy consumption for filling and/or compression. Further, any gas or fluid discharged from the buffer tank 3 is processed, e.g. dried, cleaned, etc., before being released or recycled into the plant through a suitable processing unit 22 via a supply valve 23. The fluid can be heated or cooled to obtain the desired storage and pressurization gas temperature and fluid temperature as to optimize energy consumption and prevent freezing or evaporation, not illustrated.

The operation of the plant is automated by any combination of at least one automatic control system, e.g. a programmable logic controller, and the use of autonomous mechanical units, such as check valves or the like.

## Claims

1. A plant for storing and supplying compressed gas, wherein the plant is comprising a storage tank (1) for gas, at least one pressurization tank (2) for gas and a buffer tank (3) for a pressure support fluid to be filled into or evacuated from lower portions of the storage and pressurization tanks, and wherein the lower portions of the storage and pressurization tanks are communicating with the buffer tank via fluid flow lines (4, 5) to fill pressure support fluid during supplying from and pressurizing gas in the plant, and a flow line (7) for evacuating pressure support fluid during refilling of the pressurization tank, **characterized in that** the lower portions of the storage and pressurization tanks (1, 2) are communicating with one another via a fluid flow line (6) to exchange fluid between the storage and pressurization tank, whereas the gas being pressurized in the pressurization tank is moved into the storage tank via a gas flow line (8) communicating the pressurization and storage tanks with one another, the gas flow line being situated between upper portions of the pressurization and storage tanks, wherein the plant further comprises a processing unit (22) adapted to process, e.g. dry, clean, etc., any gas or fluid discharged from the buffer tank (3) before being released or recycled into the plant.

2. A plant according to the claim 1, **characterized in that** the exchange of gas and fluid is occuring either simultaneously by using a pump or gravitational forces to move the fluid from the storage to the pressurization tank, or by sequenctional operation for which a provided overpressure in the storage tank in the first part of the sequence enables the transfer of fluid from the storage tank to the pressurization tank in the second part of the sequence.

3. A plant according to any of the proceeding the claims, **characterized in that** the fluid flow line (4) for the storage tank (1) is provided with at least one or filling pump (9) used to fill fluid from the buffer tank (3) into the storage tank (1) when supplying gas from the plant to an end-user (10) and a storage tank shut-off valve (12) used when pressurizing the gas contained in the pressurization tank (2) using fluid from the buffer tank.

4. A plant according to any of the proceeding the claims, **characterized in that** the fluid flow line (5) for the pressurization tank (2) is provided with at least one more pressurization pump (9) used to fill fluid from the buffer tank (3) into the pressurization tank when pressurizing the gas contained in the pressurization tank, and a pressurization tank shut-off valve (13) used when gas contained in the storage tank (1) is to be filled to an and-user (10) using fluid from the buffer tank

5. A plant according to the claims 3 or 4, **characterized in that** the fluid filling rate into the storage and pressurization tanks (1, 2) is controlled by a filling pump control valve (11), or by a direct control of the filling pump rate, or by other alternative fluid rate controlling mechanisms.

6. A plant according to any of the proceeding the claims, **characterized in that** the fluid flow line (6) between the storage and pressurization tanks (1, 2) is equipped with a fixed or variable restriction supply valve (14), and the gas flow line (8) between the pressurization and storage tank is provided with a fixed or variable restriction supply valve (16) used when exchanging fluid and moving pressurized gas between the storage and pressurization tanks, respectively.

7. A plant according to any of the proceeding the claims, **characterized in that** the fluid outlet line (7) from the pressurization tank (2) is formed with a fixed or variable restriction supply valve (15).

8. A plant according to any of the proceeding the claims, **characterized in that** a gas outlet line (17) from the storage tank (1) is equipped with a fixed or variable restriction supply valve (18).

9. A method in a plant for storing and supplying compressed gas, the plant including a storage tank (1) for gas, at least one pressurization tank (2) for gas, and a buffer tank (3) for a pressure support fluid, wherein lower portions of the storage and pressurization tanks are communicating with the buffer tank via fluid flow lines (4, 5), and wherein a lower portion of the respective pressurization tank is communicating with the buffer tank via a flow line (7), the method comprising:
- filling fluid into lower portions of the storage and pressurization tanks via the fluid flow lines (4, 5) during supplying from and pressurizing gas in the plant; and
- evacuating fluid from the lower portion of the respective pressurization tank via the flow line (7) during refilling of the pressurization tank,
**characterized in that** the lower portions of the storage and pressurization tanks (1, 2) are communicating with one another via a fluid flow line (6) to exchange fluid between the storage and pressurization tank, whereas the gas being pressurized in the pressurization tank is moved into the storage tank via a gas flow line (8) communicating the pressurization and storage tanks with one another, the gas flow line being situated between upper portions of the pressurization and storage tanks, wherein the method further comprising:
- filling the pressurization tank with gas from a source (19) during refilling of the pressurization tank.

10. A method according to claim 9, **characterized in that** gas is filled into the pressurization tank (2) from an external gas source (19) via an external gas source supply valve (20).

11. A method according to claim 10 or 11, **characterized in that** gas is filled directly into the storage tank (1) from an external high pressure gas source via an external gas source supply valve.

12. A method according to any claim 9 - 11, **characterized in that** fluid is filled into the buffer tank (1) from an external fluid source (24) to compensate for any fluid loss from the plant.

13. A method according to any claim 9 - 12, **characterized in that** the fluid level is monitored by high and low level detectors to prevent fluid from entering gas flow lines.

14. A method according to any claim 9 - 13, **characterized in that** the fluid level, gas temperature and tank pressure are measured and applied with the tank volume for calculating the mass of gas either filled to the end-user (10) or compressed during each cycle.

15. A method according to any claim 9 - 14, **characterized in that** the pump strokes are measured and applied for calculating the mass of gas either filled to the end-user (10) or compressed during each cycle.

16. A method according to any claim 9 - 15, **characterized in that** the fluid and gas is separated by suitable means to reduce any exchange of molecules between the fluids.

17. A method according to any claim 9 - 16, **characterized in that** the gas supplied to the end-user (10) is processed, e.g in a unit (21) as to enable drying, cleaning, cooling and the like.

18. A method according to any claim 9 - 17, **characterized in that** the pressure in the buffer tank (3) is measured and controlled to optimize the energy consumption for filling and/or compression.

19. A method according to any claim 9 - 18, **characterized in that** any gas or fluid discharged from the buffer tank (3) is processed, e.g. dried, cleaned, etc., before being released or recycled into the plant through a processing unit (22) via a supply valve (23).

20. A method according to any claim 9 - 19, **characterized in that** fluid is heated or cooled to obtain the desired storage and pressurization gas temperature and fluid temperature as to optimize energy consumption and prevent freezing or evaporation.

21. A method according to any claim 9 - 20, **characterized in that** the operation of the plant is automated by any combination of at least one automatic control system, e.g. a programmable logic controller, and the use of autonomous mechanical units, such as check valves or the like.

## Patentansprüche

1. Anlage zur Speicherung und Ausgabe von komprimiertem Gas, wobei die Anlage einen Speicherbehälter (1) für Gas, mindestens einen Druckbehälter (2) für Gas und einen Pufferbehälter (3) für ein druckbeaufschlagtes Unterstützungsfluid aufweist, welche in untere Abschnitte des Speicher- und des Druckbehälters gefüllt oder aus unteren Abschnitten des Speicher- und des Druckbehälters entleert werden kann, und wobei die unteren Abschnitte des Speicher- und des Druckbehälters mit dem Pufferbehälter über Fluidströmungsleitungen (4, 5) zum Füllen von druckbeaufschlagtem Unterstützungsfluid während der Ausgabe von Gas aus der Anlage und der Druckbeaufschlagung von Gas in der Anlage und über eine Strömungsleitung (7) zum Entleeren von druckbeaufschlagtem Unterstützungsfluid während des Nachfüllens des Druckbehälters in Kommunikation steht, **dadurch gekennzeichnet, dass** die unteren Abschnitte des Speicher- und des Druckbehälters (1, 2) über eine Fluidströmungsleitung (6) zum Austausch von Fluid zwischen dem Speicher- und dem Druckbehälter miteinander kommunizieren, während das in dem Druckbehälter druckbeaufschlagte Gas über eine Gasströmungsleitung (8) in den Speicherbehälter bewegt wird, welche den Druckbehälter und den Speicherbehälter zur Kommunikation miteinander bringt, wobei die Gasströmungsleitung zwischen oberen Abschnitten des Druckbehälters und des Speicherbehälters gelagert ist, wobei die Anlage ferner eine Verarbeitungseinheit (22) aufweist, welche zur Verarbeitung, z.B. Trocknung, Reinigung etc. eines aus dem Pufferbehälter (3) entleerten Gases oder Fluids vor Freigabe oder Recycling in die Anlage ausgebildet ist.

2. Anlage nach Anspruch 1, **dadurch gekennzeichnet, dass** der Austausch von Gas und Fluid entweder gleichzeitig unter Verwendung von einer Pumpe oder von Schwerkräften, um das Fluid aus dem Speicherbehälter zum Druckbehälter zu bewegen, oder durch sequentiellen Betrieb, bei welchem ein erzeugter Überdruck in dem Speicherbehälter in dem ersten Teil der Sequenz die Übertragung von Fluid aus dem Speicherbehälter in den Druckbehälter in dem zweiten teil der Sequenz ermöglicht, erfolgt.

3. Anlage nach einem der vorgehenden Ansprüche, **dadurch gekennzeichnet, dass** die Fluidströmungsleitung (4) für den Speicherbehälter (1) mit mindestens einem aus einer Füllpumpe (9), welche zum Füllen von Fluid aus dem Pufferbehälter (3) in den Speicherbehälter (1) bei der Ausgabe von Gas aus der Anlage zu einem Endverbraucher (10) verwendet wird, und einem Speicherbehälterabsperrventil (12), welches bei Druckbeaufschlagung des in dem Druckbehälter (2) enthaltenen Gases unter Verwendung von Fluid aus dem Pufferbehälter verwendet wird, ausgestattet ist.

4. Anlage nach einem der vorgehenden Ansprüche, **dadurch gekennzeichnet, dass** die Fluidströmungsleitung (5) für den Druckbehälter (2) mit mindestens einer weiteren Druckpumpe (9), welche dazu verwendet wird, Fluid aus dem Pufferbehälter (3) in den Druckbehälter bei Druckbeaufschlagung des in dem Druckbehälter enthaltenen Gases zu füllen, und einem Druckbehälterabsperrventil (13), welches beim Füllen von in dem Speicherbehälter (1) enthaltenem Gas in einen Endverbraucher (10) unter Verwendung von Fluid aus dem Pufferbehälter verwendet wird, ausgestattet ist.

5. Anlage nach den Ansprüchen 3 oder 4, **dadurch gekennzeichnet, dass** die Befüllungsrate des Fluids in den Speicher- und den Druckbehälter (1, 2) durch ein Füllpumpesteuerventil (11) oder durch eine direkte Steuerung der Befüllungsrate der Pumpe oder durch sonstige, alternative Fluidratesteuerungsmechanismen gesteuert wird.

6. Anlage nach einem der vorgehenden Ansprüche, **dadurch gekennzeichnet, dass** die Fluidströmungsleitung (6) zwischen dem Speicher- und dem Druckbehälter (1, 2) mit einem fixierten oder variablen Drosselventil (14) ausgestattet ist, und die Gasströmungsleitung (8) zwischen dem Druck- und dem Speicherbehälter mit einem fixierten oder variablen Drosselventil (16) zur Verwendung beim Austausch von Fluid und beim Bewegen von druckbeaufschlagtem Gas zwischen dem Speicher- bzw. dem Druckbehälter ausgestattet ist.

7. Anlage nach einem der vorgehenden Ansprüche, **dadurch gekennzeichnet, dass** die Fluidauslassleitung (7) von dem Druckbehälter (2) mit einem fixierten oder variablen Drosselventil (15) ausgebildet ist.

8. Anlage nach einem der vorgehenden Ansprüche, **dadurch gekennzeichnet, dass** eine Gasauslassleitung (17) von dem Speicherbehälter (1) mit einem fixierten oder variablen Drosselventil (18) ausgestattet ist.

9. Verfahren bei einer Anlage zur Speicherung und Ausgabe von komprimiertem Gas, wobei die Anlage einen Speicherbehälter (1) für Gas, mindestens einen Druckbehälter (2) für Gas und einen Pufferbehälter (3) für ein druckbeaufschlagtes Unterstützungsfluid aufweist, wobei untere Abschnitte des Speicher- und des Druckbehälters über Fluidströmungsleitungen (4, 5) mit dem Pufferbehälter kommuniziert, und wobei ein unterer Abschnitt des jeweiligen Druckbehälters über eine Strömungsleitung (7) mit dem Puffertank kommuniziert, wobei das Verfahren umfasst:
- Füllen von Fluid in untere Abschnitte des Speicher- und des Druckbehälters über die Fluidströmungsleitungen (4, 5) während der Ausgabe von Gas aus der Anlage und Druckbeaufschlagung des Gases in der Anlage; und
- Entleeren von Fluid aus dem unteren Abschnitt des jeweiligen Druckbehälters über die Strömungsleitung (7) während des Nachfüllens des Druckbehälters,
**dadurch gekennzeichnet, dass** die unteren Abschnitte des Speicher- und des Druckbehälters (1, 2) über eine Fluidströmungsleitung (6) zum Austausch von Fluid zwischen dem Speicher- und dem Druckbehälter miteinander kommunizieren, während das in dem Druckbehälter druckbeaufschlagte Gas über eine Gasströmungsleitung (8) in den Speicherbehälter bewegt wird, welche den Druckbehälter und den Speicherbehälter zur Kommunikation miteinander bringt, wobei die Gasströmungsleitung zwischen oberen Abschnitten des Druckbehälters und des Speicherbehälters gelagert ist, wobei das Verfahren ferner umfasst:
- Füllen des Druckbehälters mit Gas aus einer Quelle (19) während des Nachfüllens des Druckbehälters.

10. Verfahren nach Anspruch 9, **dadurch gekennzeichnet, dass** Gas aus einer externen Gasquelle (19) über ein Einlassventil einer externen Gasquelle (20) in den Druckbehälter (2) gefüllt wird.

11. Verfahren nach Anspruch 10 oder 11, **dadurch gekennzeichnet, dass** Gas aus einer externen Hochdruckgasquelle über ein Einlassventil einer externen Gasquelle direkt in den Speicherbehälter (1) gefüllt wird.

12. Verfahren nach Anspruch 9 bis 11, **dadurch gekennzeichnet, dass** Fluid aus einer externen Fluidquelle (24) in den Pufferbehälter (1) gefüllt wird, um einen jeglichen Verlust von Fluid aus der Anlage zu kompensieren.

13. Verfahren nach einem der Ansprüche 9 bis 12, **dadurch gekennzeichnet, dass** der Füllstand durch Detektoren des hohen und des niedrigen Niveaus überwacht wird, um zu verhindern, dass Fluid in die Gasströmungsleitungen eintritt.

14. Verfahren nach einem der Ansprüche 9 bis 13, **dadurch gekennzeichnet, dass** der Füllstand, die Gastemperatur und der Behälterdruck gemessen und mit dem Behältervolumen verwendet werden, um diejenige Gasmasse zu kalkulieren, die entweder für den Endverbraucher (10) zu füllen ist oder während jedes Zyklus zu komprimieren ist.

15. Verfahren nach einem der Ansprüche 9 bis 14, **dadurch gekennzeichnet, dass** die Pumpenhube gemessen und zum Kalkulieren derjenigen Gasmasse verwendet werden, die entweder für den Endverbraucher (10) zu füllen ist oder während jedes Zyklus zu komprimieren ist.

16. Verfahren nach einem der Ansprüche 9 bis 15, **dadurch gekennzeichnet, dass** das Fluid und das Gas durch geeignete Mittel getrennt werden, um einen jeglichen Austausch von Molekülen zwischen den Fluiden zu reduzieren.

17. Verfahren nach einem der Ansprüche 9 bis 16, **dadurch gekennzeichnet, dass** das zum Endverbraucher (10) ausgegebene Gas z.B. in einer Einheit (21) derart verarbeitet wird, dass eine Trocknung, Reinigung, Kühlung und dergleichen ermöglicht wird.

18. Verfahren nach einem der Ansprüche 9 bis 17, **dadurch gekennzeichnet, dass** der Druck in dem Puffertank (3) gemessen und kontrolliert wird, um den Energieverbrauch für das Füllen und/oder die Komprimierung zu optimieren.

19. Verfahren nach einem der Ansprüche 9 bis 18, **dadurch gekennzeichnet, dass** ein jegliches, aus dem Pufferbehälter (3) entleertes Gas oder Fluid verarbeitet, z.B. getrocknet, gereinigt, etc. wird, bevor es durch eine Verarbeitungseinheit (22) über ein Einlassventil (23) freigegeben oder in die Anlage recycliert wird.

20. Verfahren nach einem der Ansprüche 9 bis 19, **dadurch gekennzeichnet, dass** Fluid erhitzt oder gekühlt wird, um die erwünschte Speicher- und Druckgastemperatur und Fluidtemperatur zu erreichen, um den Energieverbrauch zu optimieren und ein Einfrieren oder eine Verdampfung zu verhindern.

21. Verfahren nach einem der Ansprüche 9 bis 20, **dadurch gekennzeichnet, dass** das Betreiben der Anlage durch eine jegliche Kombination aus mindestens einem automatischen Kontrollsystem, z.B. einer speicherprogrammierbaren Steuerung, und der Verwendung unabhängiger, mechanischer Einheiten, wie beispielsweise Rückschlagventile oder dergleichen, automatisiert wird.

## Revendications

1. Installation de stockage et de distribution de gaz comprimé, l'installation comprenant un réservoir de stockage (1) pour le gaz, au moins un réservoir de pressurisation (2) pour le gaz et un réservoir tampon (3) pour un fluide de support sous pression à remplir dans ou à évacuer depuis des portions inférieures des réservoirs de stockage et de pressurisation, et les portions inférieures des réservoirs de stockage et de pressurisation étant en communication avec le réservoir tampon via des lignes d'écoulement de fluide (4, 5) pour remplir le fluide de support sous pression pendant l'alimentation à partir de l'installation et la pressurisation du gaz dans l'installation, et une ligne d'écoulement (7) pour évacuer le fluide de support sous pression lors du remplissage du réservoir de pressurisation, **caractérisée en ce que** les portions inférieures des réservoirs de stockage et de pressurisation (1, 2) sont en communication l'une avec l'autre via une ligne d'écoulement de fluide (6) pour échanger le fluide entre le réservoir de stockage et le réservoir de pressurisation, tandis que le gaz étant pressurisé dans le réservoir de pressurisation est déplacé dans le réservoir de stockage via une ligne d'écoulement de gaz (8) mettant en communication les réservoirs de pressurisation et de stockage l'un avec l'autre, la ligne d'écoulement de gaz étant située entre des portions supérieures des réservoirs de pressurisation et de stockage, l'installation comprenant en outre une unité de traitement (22) adaptée pour traiter, p. ex. sécher, nettoyer, etc., tout gaz ou tout fluide déchargé du réservoir tampon (3) avant d'être relâché ou recyclé dans l'installation.

2. Installation selon la revendication 1, **caractérisée en ce que** l'échange de gaz et de fluide est réalisé soit en même temps à l'usage d'une pompe ou de la force gravitationnelle pour déplacer le fluide du réservoir de stockage au réservoir de pressurisation, soit par une opération séquentielle pour laquelle une surpression pourvue dans le réservoir de stockage dans la première partie de la séquence permet le transfert de fluide du réservoir de stockage au réservoir de pressurisation dans la deuxième partie de la séquence.

3. Installation selon l'une des revendications précédentes, **caractérisée en ce que** la ligne d'écoulement de fluide (4) pour le réservoir de stockage (1) est pourvue d'au moins une pompe de remplissage (9) utilisée pour remplir de fluide à partir du réservoir tampon (3) dans le réservoir de stockage (1) lors de la fourniture de gaz à partir de l'installation à un utilisateur final (10) et une vanne d'arrêt de réservoir de stockage (12) utilisée lors de la pressurisation du gaz contenu dans le réservoir de pressurisation (2) à l'aide de fluide venant du réservoir tampon.

4. Installation selon l'une quelconque des revendications précédentes, **caractérisée en ce que** la ligne d'écoulement de fluide (5) pour le réservoir de pressurisation (2) est pourvue d'au moins une pompe de pressurisation supplémentaire (9) utilisée pour remplir du fluide à partir du réservoir tampon (3) dans le réservoir de pressurisation lors de la pressurisation du gaz contenu dans le réservoir de pressurisation et une vanne d'arrêt de réservoir de pressurisation (13) utilisée lorsque le gaz contenu dans le réservoir de stockage (1) est à fournir à un utilisateur final (10) à l'aide de fluide venant du réservoir tampon.

5. Installation selon les revendications 3 ou 4, **caractérisée en ce que** la vitesse de remplissage de fluide dans les réservoirs de stockage et de pressurisation (1, 2) est commandée par une vanne de commande de pompe de remplissage (11) ou par une commande directe de la vitesse de pompe de remplissage ou par d'autres mécanismes alternatifs de commande de vitesse de fluide.

6. Installation selon l'une quelconque des revendications précédentes, **caractérisée en ce que** la ligne d'écoulement de fluide (6) entre les réservoirs de stockage et de pressurisation (1, 2) est pourvue d'une vanne d'alimentation à restriction fixé ou variable (14), et la ligne d'écoulement de gaz (8) entre les réservoirs de stockage et de pressurisation est pourvue d'une vanne d'alimentation à restriction fixé ou variable (16) utilisée lors de l'échange de fluide et du déplacement du gaz pressurisé entre respectivement le réservoir de stockage et le réservoir de pressurisation.

7. Installation selon l'une quelconque des revendications précédentes, **caractérisé en ce que** la ligne de sortie de fluide (7) partant du réservoir de pressurisation (2) est pourvue d'une vanne d'alimentation à restriction fixée ou variable (15).

8. Installation selon l'une quelconque des revendications précédentes, **caractérisé en ce qu'**une ligne de sortie de gaz (17) partant du réservoir de stockage (1) est pourvue d'une vanne d'alimentation à restriction fixée ou variable (18).

9. Procédé dans une installation de stockage et de distribution de gaz comprimé, l'installation comprenant un réservoir de stockage (1) pour le gaz, au moins un réservoir de pressurisation (2) pour le gaz et un réservoir tampon (3) pour un fluide de support sous pression, les portions inférieures des réservoirs de stockage et de pressurisation étant en communication avec le réservoir tampon via des lignes d'écoulement de fluide (4, 5), et une portion inférieure du réservoir de pressurisation respectif étant en communication avec le réservoir tampon via une ligne d'écoulement (7), le procédé comprenant:
- remplir du fluide dans des portions inférieures des réservoirs de stockage et de pressurisation via les lignes d'écoulement de fluide (4, 5) pendant l'alimentation à partir l'installation et la pressurisation du gaz dans l'installation; et
- évacuer le fluide depuis la portion inférieure du réservoir de pressurisation respectif via la ligne d'écoulement (7) lors du remplissage du réservoir de pressurisation,
**caractérisé en ce que** les portions inférieures des réservoirs de stockage et de pressurisation (1, 2) sont en communication l'une avec l'autre via une ligne d'écoulement de fluide (6) pour échanger du fluide entre le réservoir de stockage et le réservoir de pressurisation, tandis que le gaz étant pressurisé dans le réservoir de pressurisation est déplacé dans le réservoir de stockage via une ligne d'écoulement de gaz (8) mettant en communication les réservoirs de pressurisation et de stockage l'un avec l'autre, la ligne d'écoulement de gaz étant située entre des portions supérieures des réservoirs de pressurisation et de stockage, le procédé comprenant en outre:
- le remplissage du réservoir de pressurisation de gaz à partir d'une source (19) lors du remplissage du réservoir de pressurisation.

10. Procédé selon la revendication 9, **caractérisé en ce que** le gaz est rempli dans le réservoir de pressurisation (2) à partir d'une source gazeuse extérieure (19) via une vanne d'admission de source gazeuse extérieure (20).

11. Procédé selon la revendication 10 ou 11, **caractérisé en ce que** le gaz est rempli directement dans le réservoir de stockage (1) à partir d'une source gazeuse extérieure à haute pression via une vanne d'admission de source gazeuse extérieure (20).

12. Procédé selon l'une quelconque des revendications 9 à 11, **caractérisé en ce que** le fluide est rempli dans le réservoir tampon (1) à partir d'une source de fluide extérieure (24) pour compenser toute perte de fluide depuis l'installation.

13. Procédé selon l'une quelconque des revendications 9 à 12, **caractérisé en ce que** le niveau de fluide est contrôlé par des détecteurs à haut et bas niveau pour empêcher le fluide d'entrer dans les lignes d'écoulement de gaz.

14. Procédé selon l'une quelconque des revendications 9 à 13, **caractérisé en ce que** le niveau de fluide, la température de gaz et la pression de réservoir sont mesurés et appliqués avec le volume de réservoir pour calculer la masse gazeuse soit remplie pour l'utilisateur final (10) soit comprimée lors de chaque cycle.

15. Procédé selon l'une quelconque des revendications 9 à 14, **caractérisé en ce que** les pistons de pompe sont mesurés et appliqués pour calculer la masse gazeuse soit remplie pour l'utilisateur final (10) soit comprimée lors de chaque cycle.

16. Procédé selon l'une quelconque des revendications 9 à 15, **caractérisé en ce que** le fluide et le gaz sont séparés par des moyens appropriés pour réduire tout exchange de molécules entre les fluides.

17. Procédé selon l'une quelconque des revendications 9 à 16, **caractérisé en ce que** le gaz fourni à l'utilisateur final (10) est traité, p. ex. dans une unité (21) de manière à permettre le séchage, le nettoyage, le refroidissement et pareil.

18. Procédé selon l'une quelconque des revendications 9 à 17, **caractérisé en ce que** la pression dans le réservoir tampon (3) est mesurée et contrôlée pour optimiser la consommation d'énergie pour le remplissage et/ou la compression.

19. Procédé selon l'une quelconque des revendications 9 à 18, **caractérisé en ce que** tout gaz ou tout fluide déchargé à partir du réservoir tampon (3) est traité, p. ex. séché, nettoyé, etc. avant d'être relâché ou recyclé dans l'installation à travers une unité de traitement (22) via une vanne d'admission (23).

20. Procédé selon l'une quelconque des revendications 9 à 19, **caractérisé en ce que** le fluide est réchauffé ou refroidi pour obtenir la température voulue de gaz de stockage et de pressurisation et la température voulue de fluide pour optimiser la consommation d'énergie et empêcher la congélation ou l'évaporation.

21. Procédé selon l'une quelconque des revendications 9 à 20, **caractérisé en ce que** l'opération de l'installation est automatisée par toute combinaison d'au moins un système de commande automatique, p. ex. une commande logique programmable, et l'usage d'unités mécaniques autonomes, tels que des soupapes de contrôle ou analogues.
